(19) Europäisches Patentamt
European Patent Office
Office européen des brevets

(11) **EP 1 757 564 B1**

(12) **EUROPÄISCHE PATENTSCHRIFT**

(45) Veröffentlichungstag und Bekanntmachung des Hinweises auf die Patenterteilung:
**29.10.2014 Patentblatt 2014/44**

(51) Int Cl.:
**C03C 10/00** *(2006.01)*     **C03C 1/00** *(2006.01)*
**C03B 5/225** *(2006.01)*

(21) Anmeldenummer: **06017122.0**

(22) Anmeldetag: **17.08.2006**

(54) **Verfahren zum Läutern einer Glasschmelze**

Process to refine a glassmelt

Procédé pour l'affinage de verre fondu

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.08.2005 DE 102005039919**

(43) Veröffentlichungstag der Anmeldung:
**28.02.2007 Patentblatt 2007/09**

(73) Patentinhaber: **Schott AG**
**55122 Mainz (DE)**

(72) Erfinder:
• **Schmitt, Stefan**
**55271 Stadecken-Elsheim (DE)**
• **Schmidbauer, Wolfgang**
**55126 Mainz (DE)**
• **Siebers, Friedrich**
**55283 Nierstein (DE)**
• **Rodek, Erich**
**55126 Mainz (DE)**
• **Best, Reiner**
**55234 Albig (DE)**
• **Lautenschläger, Gerhard**
**07743 Jena (DE)**
• **Blei, Horst**
**55246 Mainz-Kostheim (DE)**
• **Oehler, Joachim**
**55543 Bad Kreuznach (DE)**
• **Illing-Zimmermann, Petra**
**55283 Nierstein-Schwabsburg (DE)**

(74) Vertreter: **Mehler Achler**
**Patentanwälte**
**Bahnhofstraße 67**
**65185 Wiesbaden (DE)**

(56) Entgegenhaltungen:
EP-A- 1 593 658        EP-A2- 1 285 886
DE-A1- 10 138 108      DE-A1- 10 236 521
DE-A1- 19 939 787

• DATABASE WPI Week 200276 Derwent Publications Ltd., London, GB; AN 2002-700394 XP002411688 -& JP 2002 154840 A (NIPPON ELECTRIC GLASS CO) 28. Mai 2002 (2002-05-28)

EP 1 757 564 B1

## Beschreibung

Die Erfindung bezieht sich auf ein Verfahren zum Läutern einer Glasschmelze für ein LAS-Glaskeramik-Grünglas.

Beim Schmelzen von Glas entstehen als Folge der chemischen Umsetzung der Ausgangsstoffe, des Gemenges, beachtliche Mengen an Gasen. Eine grobe Schätzung besagt, dass man aus 1,2 kg Gemenge etwa 1 kg Glas erschmilzt, d. h. während des Einschmelzens wird $\approx$ 1/5 des Gemengegewichts in Form von Gas freigesetzt. Andere Gase werden körperlich durch das Gemenge mitgeführt oder durch die Verbrennungs-Wärmequellen in das schmelzende Glas eingebracht.

Das meiste Gas entweicht zwar während des anfänglichen Aufschmelzens des Glases, jedoch wird ein beachtlicher Teil des Gases in der Schmelze eingefangen. Ein Teil des eingefangenen Gases wird in der Glasschmelze gelöst, der andere Teil verbleibt als örtliche Gaseinschlüsse, als sogenannte Blasen, in der Schmelze. Dabei wachsen oder schrumpfen die Blasen, wenn der Blaseninnendruck höher oder niedriger ist als der Gleichgewichtsdruck der gelösten Gase. Die Gasblasen haben dabei unterschiedliche Größen.

Da diese Gasblasen die Qualität eines aus der Glasschmelze hergestellten Glas- bzw. Glaskeramikkörpers nachteilig beeinträchtigen würden, wird die Glasschmelze von dem Gas geläutert.

Unter dem Läutern von Glas versteht man daher einen dem "eigentlichen" Aufschmelzvorgang in sogenannten Läuterbereichen nachgeschalteten Schmelzverfahrensschritt.

Die Gasblasen haben zwar von Hause aus durch ihren statischen Auftrieb infolge des Dichteunterschiedes zwischen Gasblasen und Glasschmelze das Bestreben, in der Schmelze aufzusteigen und dann ins Freie zu entweichen. Dieser Vorgang braucht ohne äußere Einflüsse jedoch eine beträchtliche Zeit, die den Produktionsprozess wegen langer Standzeiten verteuern würde. Es sind daher unterstützende Läutermaßnahmen notwendig.

Für diese Läutermaßnahmen haben sich in bekannter Weise verschiedene Methoden herausgebildet.

So ist z. B. aus der DE 199 39 771 B4 und der DE 100 03 948 A1 bekannt, mit separaten, der Schmelzwanne nachgeordneten Hochtemperatur-Läuteraggregaten mit Hochfrequenz- und Skulltechnologie höhere Temperaturen (> 1.750° C) bei mäßigen Läutermittelgehalten (< 0,25 Gew.-%) zu erzeugen, um so die Viskosität der Schmelze zu verringern und damit die Aufstiegsgeschwindigkeit der Gasblasen zu erhöhen. Typischerweise sind dabei zwei unabhängige, miteinander verbundene Läuteraggregate vorgesehen. Auch die WO 02/16279 A1 (= DE 199 39 787 C2) beschreibt u. a. die Herstellung einer mit $V_2O_5$ in Verbindung mit Reduktionsmitteln eingefärbten LAS (Lithium-Aluminium-Silikat)-Glaskeramik mittels Hochtemperaturläuterung bei 1975° C für 1 h ohne die Standard-Läutermittel AS oder Sb, sondern mit alternativen Läutermitteln $SnO_2$, oder $CeO_2$ oder Sulfat- oder Chloridverbindungen. Diese in Aufsicht schwarz anmutende Glaskeramik wird typischerweise für die Herstellung von Kochflächen verwendet und ist unter der Markenbezeichenung CERAN SUPREMA® auf dem Markt.

Diese zusätzlichen Läuteraggregate erfordern höhere Investitionsaufwendungen und führen aufgrund ihres schlechten energetischen Wirkungsgrades im Betrieb zu höheren Energiekosten, was ebenfalls den Produktionsprozess kostenmäßig stark belastet. Nachteilig ist bei der Herstellung vieler Gläser auch, dass mit höheren Temperaturen die Gefahr der Verdampfung von Komponenten aus der Glasschmelze zunimmt. Dies kann verschiedene, unerwünschte und nachteilige Folgen haben.

Eine weitere Möglichkeit, die Aufstiegsgeschwindigkeit der Gasblasen zu erhöhen, besteht darin, den Blasendurchmesser zu vergrößern. Die bei der Läuterung üblichen Temperaturerhöhungen führen allein zu keiner nennenswerten Vergrößerung der Blasendurchmesser. Bewährt und weitgehend optimiert ist für diesen Zweck die Methode des chemischen Läuterns von Glas mit Oxiden polyvalenter Läutermittel mit temperaturabhängigen Oxidationsstufen. Hierbei kommen insbesondere als Läutermittel Sb(V)-Oxid, As(V)-Oxid und Sn(IV)-Oxid in Frage, mit > 0,5 Gew.-% an Läutermittel bei Schmelz-/Läutertemperaturen von > 1.600° C. Beispielhaft hierfür wird auf die Schriften JP 2002-154840 A und EP 1 593 658 A1 (nachveröffentlicht) verwiesen. Die chemischen Läutermittel setzen in der Glasschmelze Gase frei, die durch Stofftransportvorgänge in die Gasblasen gelangen. Die so zusätzlich in die Gasblasen gelangenden Gasmengen führen zum gewünschten Blasenwachstum. Hohe Läutermittelgehalte verursachen jedoch höhere Gemengekosten und führen bei einer Heißformgebung aufgrund ihrer Verdampfungsneigung zu erheblichen Problemen am Glas und an den Formgebungswerkzeugen.

Es sind auch sogenannte physikalische Läuterverfahren bekannt geworden, die die Chemie des Glases weitgehend unbeeinträchtigt lassen. Das physikalische Läutern einer Glasschmelze beruht darauf, dass Blasen mit physikalischen Methoden "gezwungen" werden, an die Oberfläche der Schmelze aufzusteigen. Dort zerplatzen die Blasen und geben ihren Gasinhalt frei oder lösen sich in der Schmelze auf.

Ein weitverbreitetes physikalisches Läuterverfahren stellt dabei das sogenannte Unterdruckläutern dar, das in zahlreichen einschlägigen Veröffentlichungen beschrieben wird. Beispielhaft sei hierzu auf die EP 0 908 417 A2, und die DE 101 46 884 A1 und die DE 102 23 889 A1 verwiesen. Beim Unterdruckläutern wachsen ebenfalls die in der Schmelze vorhandenen Blasen. Das Blasenwachstum ist einmal bedingt durch das Boyle-Mariottesche Gesetz "p • V = const.", d. h. fällt der Druck p ab, so steigt das Volumen V und zum anderen dadurch, dass der Partialdruck der in den Blasen vorhandenen Gase unter den Partialdruck der Gase in der Schmelze erniedrigt wird. Somit setzt eine Strömung der Gase aus der Schmelze in die Blasen ein. Die Blasen werden durch diese Effekte größer, steigen schneller an die Oberfläche der Schmelze auf und können diese in den darüberliegenden Ofenraum verlassen. Dabei ist auch zu berücksichtigen, dass eine spontane Neublasenbildung der gelösten Gase an sogenannten Keimen (Wandung, Miniblasen) stattfindet, was in der Regel zu Schaum führt, der mit geeigneten Methoden bekämpft werden kann.

Trotz der beschriebenen gravierenden Nachteile für den Herstellprozess, die Umwelt und/oder die Wirtschaftlichkeit werden in der Praxis überwiegend die beschriebenen Läuterverfahren mit hohen Gehalten an polyvalenten Läutermitteln bei hohen Schmelz-/Läutertemperaturen oder mit teuren zusätzlichen Läuteraggregaten bei sehr hohen Läutertemperaturen und mäßigen Läutermittelgehalten eingesetzt.

Der Erfindung liegt die Aufgabe zugrunde, auf der Basis des eingangs bezeichneten Verfahrens eine Glasschmelze für ein Glaskeramik-Grünglas bei mäßigen Läutermittelgehalten unter Verzicht auf zusätzliche spezielle Hochtemperatur-Läuteraggregate bei den üblichen hohen Läutertemperaturen mit hinreichend geringen Blasenzahlen im Grünglas und damit auch im keramisierten Produkt zu läutern.

Die Lösung dieser Aufgabe gelingt gemäß einer ersten Variante durch ein Verfahren zum Läutern einer Glasschmelze für ein Glaskeramik-Grünglas mit den Schritten:

- Bereitstellen eines Glasgemenges auf der Basis eines Lithium-AluminiumSilikat(LAS)-Glassystems mit einem alleinigen Zusatz von Zinnoxid als Läutermittel mit einem Gehalt ≤ 0,4 Gew.-% unter Verzicht auf Arsen- und/oder Antimonoxid als Läutermittel,
- Auslegen der Schmelzwanne hinsichtlich minimaler Verweilzeit des zu läuternden Glases und mittlerer Glastemperatur nach der Formel:

$$t_{(min)} (T, x) = 2 + [0{,}5 \cdot (1700 - T_{(mit)})] + [50 \cdot (0{,}40 - x)] \text{ in h für}$$

$$T_{(mit)} \leq 1700\ °C \text{ und } x \leq 0{,}40\ \%$$

mit $t_{(min)}$ = minimaler Verweilzeit, $T_{(mit)}$ = mittlere Glastemperatur, x = Läutermittelgehalt, und
- Einschmelzen des Gemenges und Läutern der Schmelze bei Temperaturen < 1.700° C unter Verzicht auf zusätzliche spezielle Hochtemperatur-Läuteraggregate.

Durch die erfindungsgemäßen Maßnahmen gelingt es mit großem Vorteil, auf wirtschaftliche Weise LAS-Gläser mit einem mäßigen Gehalt an einem alternativen Läutermittel bei konventionellen mittleren Glastemperaturen und mit Schmelz-Läuterwannen ohne Zusatzaggregaten so zu läutern, dass die Zahl der Blasen im Grünglas und damit auch im fertigen Glaskeramikprodukt <1 Blase/kg Schmelze ist, d. h. eine hohe Blasenqualität im Grünglas bzw. im Glaskeramikprodukt erreichbar ist. Dabei kommt es auch wesentlich auf die Auslegung der Schmelzanlage hinsichtlich der Verweilzeit des zu läuternden Glases und der mittleren Glastemperatur an. Die mittlere Glastemperatur ist dabei die mittlere Temperatur, die ein Teilchen bei der Wanderung durch die komplette Wanne insgesamt im Mittel erfahren hat. Unter der Verweilzeit versteht man die Aufenthaltsdauer der Teilchen in der Schmelze, die u. a. auch von der Dauer des Schmelzvorganges und dem Durchsatz abhängig ist, wobei nach der Lehrmeinung eine kurze Aufenthaltsdauer ein Maß für schlechte Blasenqualität sein soll.

Die Lösung dieser Aufgabe gelingt gemäß einer zweiten Variante durch ein Verfahren zum Läutern einer Glasschmelze für ein Glaskeramik-Grünglas mit den Schritten:

- Bereitstellen eines Glasgemenges auf der Basis eines Lithium-AluminiumSilikat(LAS)-Glassystems mit einem alleinigen Zusatz von Zinnoxid als Läutermittel mit einem Gehalt ≤ 0,4 Gew.-% unter Verzicht aufArsen- und/oder Antimonoxid als Läutermittel,
- Auslegen der Schmelzwanne hinsichtlich minimaler Verweilzeit des zu läuternden Glases und mittlerer Glastemperatur nach der Formel:

$$t_{(min)} (T, x) = -13 + [0{,}5 \cdot (1750 - T_{(mit)})] + [50 \cdot (0{,}40 - x)] \text{ in h für } T_{(mit)} \leq 1720$$

$$°C \text{ und } x \leq 0{,}40\ \%$$

mit $t_{(min)}$ = minimaler Verweilzeit, $T_{(mit)}$ = mittlere Glastemperatur, x = Läutermittelgehalt, und
- Einschmelzen des Gemenges und Läutern der Schmelze bei Temperaturen ≤ 1720 °C unter Verzicht auf zusätzliche spezielle Hochtemperatur-Läuteraggregate.

Die Zahl der Blasen im Grünglas und damit im fertigen Glaskeramikprodukt liegt bei < 0,1 Blase/kg Schmelze.

In beiden Verfahrensvarianten bezieht sich die Angabe Blase/kg auf Blasen mit einer mittleren Längenerstreckung von > 0,1 mm. Blasen sind in der Regel nicht rund, sondern deformiert und im allgemeinen ellipsoidenförmig, so dass die jeweils größte Länge der Blase zur Auswertung herangezogen wird. Die Blasengrößen und damit die Längenerstreckungen unterliegen einer Normalverteilung, auf die sich die Angabe der mittleren Längenerstreckung bezieht.

Die Messung der Blasen kann visuell mit dem Auge, mittels technischer Hilfsmittel wie z. B. Lupen oder Mikroskope oder auch durch vollautomatisierte Fehlererkennungsanlagen (Auflicht- und/oder Durchlichtmethoden) erfolgen.

Die Blasengröße wird bestimmt durch die größte messbare Längenerstreckung der in der Regel nicht runden Blasen in der durch die eingesetzten Messmethoden erkennbaren Ausrichtung der Blasen. Dies schließt nicht aus, das die erfasste Blase in Blickrichtung eine noch größere Längenerstreckung aufweist, die jedoch nicht messbar ist.

Es hat sich überraschenderweise gezeigt, dass Temperatur und Zeit nicht die gleiche Wirkung haben, wobei es auch auf den Zusammenhang zwischen Läutermittelkonzentration und Temperatur ankommt. Dabei ist die Strömungseinstellung in der Schmelzwanne zweckmäßig so, dass die blasenbehaftete Glasschmelze möglichst lange einer hohen Temperatur ausgesetzt ist, aber nicht zwingend an der Schmelzbad-Oberfläche sondern so, dass zum richtigen Zeitpunkt heißes Glas an die Oberfläche gelangt.

Ausgestaltungen des erfindungsgemäßen Verfahrens sind in den zugehörigen Unteransprüchen gekennzeichnet sowie ergeben sich auch aus der nachfolgenden Beschreibung anhand von Tabellen und von in Zeichnungen dargestellten Diagrammen und Schmelzwannen-Einbauten.

Es zeigen:

Fig. 1 ein Diagramm, das den Einfluss der Läutermittelkonzentration auf das Ergebnis "Blasen pro kg" bei gleicher Verweilzeit und gleicher mittlerer Temperatur zeigt,

Fig. 2 ein Diagramm, das den Zusammenhang zwischen minimaler Verweilzeit, mittlerer Glastemperatur und dem Ergebnis "Blasen pro kg" zeigt,

Fig. 3 ein Diagramm, das den Einfluss der minimalen Verweilzeit auf das Ergebnis "Blasen pro kg" bei in etwa gleicher mittleren Glastemperatur zeigt,

Fig. 4 in einer schematischen Darstellung ein Schmelzwannen-Design mit einem Überströmwall in Verbindung mit einer elektrischen Zusatzheizung,

Fig. 5 in einer schematischen Darstellung ein Schmelzwannen-Design nach Fig. 4, wobei zusätzlich Blasdüsen in Anordnung quer zur Glasflussrichtung vorgesehen sind,

Fig. 6 in einer schematischen Darstellung ein Schmelzwannen-Design nach Fig. 4, wobei zusätzlich ein Brückenwall vorgesehen ist,

Fig. 7 in einer schematischen Darstellung ein Schmelzwannen-Design mit einem Brückenwall nach Fig. 6 und einem Überströmwall entsprechend Fig. 5, jedoch ohne elektrische Zusatzheizung, wobei zusätzlich Blasdüsen sowohl in Anordnung quer zur Glasflussrichtung als auch längs zur Glasflussrichtung vorgesehen sind, und

Fig. 8 in einer schematischen Darstellung ein Schmelzwannen-Design nach Fig. 7, jedoch ohne Brückenwall.

Wie in der Beschreibungseinleitung dargelegt, kommt es bei den erfindungsgemäßen Maßnahmen neben dem Läutermittel und seinem Gehalt in dem Gemenge, der mittleren Glastemperatur und dem Glassystem auf das Auslegen der Schmelzanlage hinsichtlich minimaler Verweilzeit des zu läuternden Glases und der mittleren Glastemperatur an, um die hohe Blasenqualität von < 1 Blase /kg Schmelze zu erreichen.

Die Zusammenhänge zwischen den Prozessparametern sollen im folgenden erläutert werden.

Zunächst wurden verschiedene Wannenversuche mit unterschiedlichen Schmelzwannen und Läutermittelgehalten an $SnO_2$ bei der Herstellung eines LAS-Grünglases für eine entsprechende Glaskeramik gefahren und ihr Einfluss auf die Blasenqualität im Produkt untersucht.

Die Ergebnisse der Wannenversuche und Produktionen von Glaskeramik in unterschiedlichen Schmelzwannen A, B und C sind in der nachstehenden Tabelle 1 zusammengestellt.

**Tabelle 1**

| Nummer des Versuches | Wanne Nr. | Gew.-% $SnO_2$ im Glas % | Blasen im Produkt 1 kg |
|---|---|---|---|
| 1 | A | 0,22 | 100 |
| 2 | A | 0,22 | 1 |
| 3 | B | 0,22 | 85 |
| 4 | B | 0,23 | 15 |
| 5 | C | 0,20 | 10000 |
| 6 | C | 0,20 | 40000 |
| 7 | C | 0,20 | 2000 |
| 8 | C | 0,80 | 1 |

Die Wanne A bezieht sich dabei auf eine solche mit einem Hochtemperatur-Läuteraggregat, das im Versuch 1 ausgeschaltet und im Versuch Nr. 2 eingeschaltet war, um eine Blasenqualität von 1 Blase/kg bei geringem Läutermittelgehalt um 0,22 Gew.-% $SnO_2$ zu erhalten, wogegen sich die Wannen B und C auf konventionelle Wannen ohne zusätzliches Hochtemperatur-Läuteraggregat beziehen.

Parallel dazu wurden die Wannenfahrweisen der einzelnen Versuche/Produktionen mit Hilfe einer mathematischen Simulation berechnet. Für diese Berechnungen stehen dem zuständigen Fachmann einschlägige, bekannte Rechnungsprogramme zur Verfügung, so dass diese hier nicht näher erläutert werden müssen.

Aus den Simulationen wurden aussagefähige Parameter/Kenngrößen ermittelt, die in der nachstehenden Tabelle 2 zusammengestellt sind:

**Tabelle 2**

| Nummer des Versuches | Gew.-% $SnO_2$ Im Glas $SnO_2$-Anteil % | Minimale Verweilzeit $t_{(min)}$ h | Mittlere Temperatur $T_{(mit)}$ °C |
|---|---|---|---|
| 1 | 0,22 | 5,1 | 1672 |
| 2 | 0,22 | 5,5 | 1731 |
| 3 | 0,22 | 17,5 | 1646 |
| 4 | 0,23 | 15,5 | 1660 |
| 5 | 0,20 | 17,6 | 1599 |
| 6 | 0,20 | 15,8 | 1595 |
| 7 | 0,20 | 15,1 | 1612 |
| 8 | 0,80 | 15,1 | 1612 |

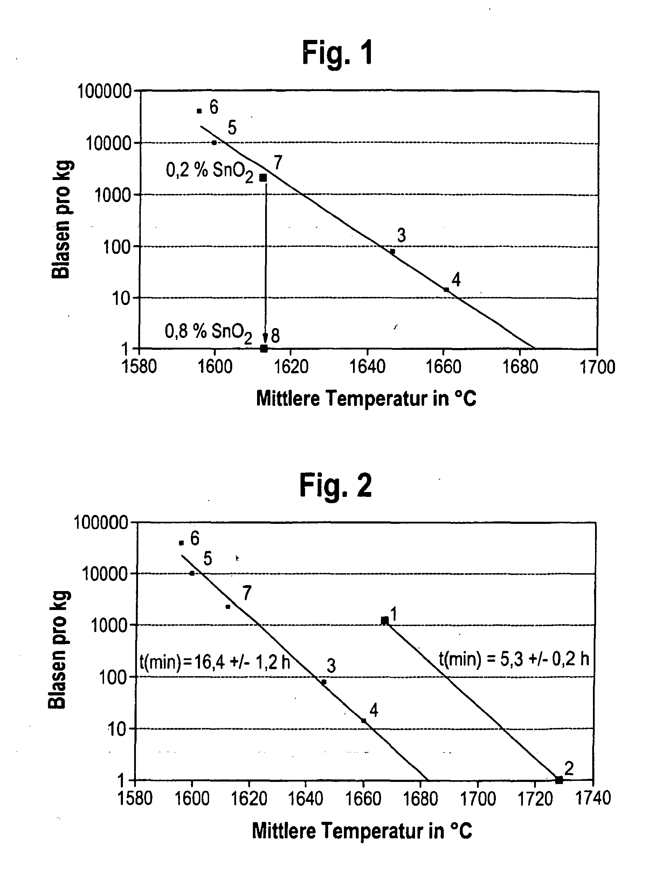

Aus den realen Qualitätsdaten der Versuche gemäß Tabelle 1 und den Kennzahlen/Parametern der mathematischen Simulation nach Tabelle 2 können nachfolgende Zusammenhänge korreliert werden, die in den Figuren 1 bis 3 jeweils in Form eines Diagramms bildlich dargestellt sind.

**I. Einfluss der Läutermittelkonzentration auf das Ergebnis Blasen pro kg bei annähernd gleicher minimaler Verweilzeit und gleicher mittlerer Temperatur**

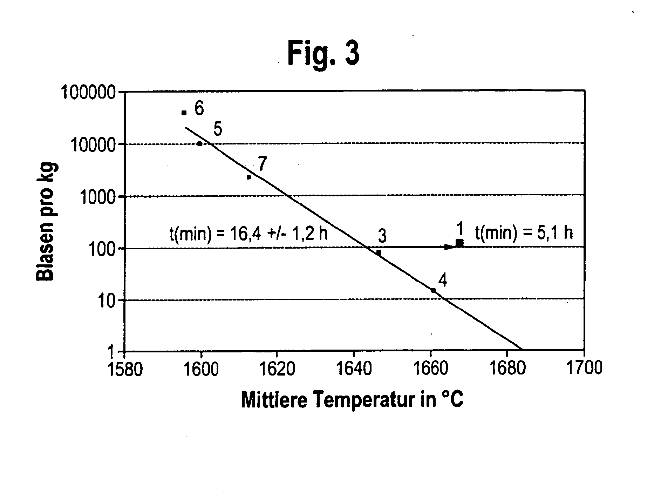

Dieser Zusammenhang ist im Diagramm nach Fig. 1 dargestellt, mit zwei Läutermittelkonzentrationen von ca. 0,2 % $SnO_2$ und 0,8 % $SnO_2$, wobei an den einzelnen Korrelationspunkten die Nummern der Versuche nach Tabelle 1 angegeben sind, was auch für die Figuren 2 und 3 entsprechend gilt.

**II. Zusammenhang zwischen minimaler Verweilzeit, mittlerer Glastemperatur und den Ergebnis Blasen pro kg**

Dieser Zusammenhang ist in Fig. 2 dargestellt, auf der Basis der linearen Kurve bei einem Läutermittelgehalt von 0,2 $SnO_2$ nach Fig. 1 und einer minimalen Verweilzeit $t_{(min)}$ von 16,4 h (Versuche 3 bis 7) und 5,3 h (Versuche 1 und 2).

III. **Einfluss der minimalen Verweilzeit auf das Ergebnis Blasen pro kg bei in etwa gleicher mittlerer Glastemperatur**

Dieser Zusammenhang ist in Fig. 3 dargestellt, ebenfall auf der Basis der linearen Kurve bei einem Läutermittelgehalt von 0,2 % SnO2 nach Fig. 1 und einer minimalen Verweilzeit $t_{(min)}$ von 16,4 h und 5,1 h.

Aus den Diagrammen nach den Figuren 1 bis 3 können folgende Zusammenhänge abgeleitet werden:

- Eine Verringerung des $SnO_2$-Gehaltes im Glas um 0,2 % bedeutet eine Verschlechterung des Blasenergebnisses um 1 Größenordnung (aus Fig. 1).
- Eine Erhöhung der mittleren Glastemperatur um 20° C führt zu einer Verbesserung des Blasenergebnisses um 1 Größenordnung (aus Fig. 2, Sprung von Punkt 3 auf Punkt 4).
- Eine Verringerung der mittleren Glastemperatur um 2° C kann durch eine Erhöhung der minimalen Verweilzeit um 1 h kompensiert werden (aus Fig. 2 in Verbindung mit Fig. 3).

Daraus lassen sich für einen angestrebten Läutermittelgehalt "x" von 0,4 Gew.-% $SnO_2$ und kleiner, einer mittleren Glastemperaturen "$T_{(mit)}$" von maximal 1700° C und Blasenzahlen unter 1/kg nachfolgende Parameter für die minimale Verweilzeit ($t_{min}$) ableiten:

**Tabelle 3**

| SnO2-Gehalt in Gew.-% | $T_{(mit)}/t_{(min)}$ in °C/h | $t_{(min)}$ in h bei $T_{(mit)}$ = 1700 °C | $t_{(min)}$ in h bei $T_{(mit)}$ = 1690 °C | $t_{(min)}$ in h bei $T_{(mit)}$ = 1680 °C |
|---|---|---|---|---|
| 0,40 | 1680/12 | 2 | 7 | 12 |
| 0,35 | 1685/12 | 4,5 | 9,5 | 14,5 |
| 0,30 | 1690/12 | 7 | 12 | 17 |
| 0,25 | 1695/12 | 9,5 | 14,5 | 19,5 |
| 0,20 | 1700/12 | 12 | 17 | 22 |
| 0,15 | 1705/12 | 14,5 | 19,5 | 24,5 |
| 0,10 | 1710/12 | 17 | 22 | 27 |
| 0,05 | 1715/12 | 19,5 | 24,5 | 29,5 |

Die Zusammenhänge können auch mit folgender extrapolierter Formel beschrieben werden:

$$t_{(min)} (T, x) = 2 + [0,5 \cdot (1700 - T_{(mit)})] + [50 \cdot (0,40 - x)] \text{ h} \quad \text{für } T_{(mit)} \leq 1700 \text{ °C und } x < 0,40 \text{ %}$$

Aus den Diagrammen lassen sich für einen angestrebten Läutermittelgehalt "x" von 0,4 Gew.-% $SnO_2$ und kleiner, einer mittleren Glastemperatur "$T_{(mit)}$" von maximal 1720 °C und Blasenzahlen unter 0,1/kg nachfolgende Parameter für die minimale Verweilzeit ($t_{min}$) ableiten:

**Tabelle 4**

| SnO2-Gehalt in Gew.-% | $t_{(min)}$ in h bei $T_{(mit)}$ = 1720 °C | $t_{(min)}$ in h bei $T_{(mit)}$ = 1700 °C | $t_{(min)}$ in h bei $T_{(mit)}$ = 1680 °C |
|---|---|---|---|
| 0,40 | 2 | 12 | 22 |
| 0,35 | 4,5 | 14,5 | 24,5 |
| 0,30 | 7 | 17 | 27 |
| 0,25 | 9,5 | 19,5 | 29,5 |
| 0,20 | 12 | 22 | 32 |
| 0,15 | 14,5 | 24,5 | 34,5 |
| 0,10 | 17 | 27 | 37 |
| 0,05 | 19,5 | 29,5 | 39,5 |

Die Zusammenhänge können auch mit folgender extrapolierter Formel beschrieben werden:

$$t_{(min)} (T, x) = -13 + [0.5 \cdot (1750 - T_{(mit)})] + [50 \cdot (0.40 - x)] \text{ h} \quad \text{für } T_{(mit)} \leq 1720 \text{ °C und}$$

$$x < 0.40 \text{ %}$$

Diese Formeln bzw. die Tabellen 3 und 4 werden nun gemäß einem Merkmal der Erfindung als Basis zur Auslegung der Schmelzwanne herangezogen. Dabei kann in der Formel für die minimale Verweilzeit eine Genauigkeit von +/-10 % relativ für realistisch angesehen werden. Hinsichtlich der variablen Parameter erfolgt dabei die Auslegung der Anlage und die Einhaltung der Formel mittels der erwähnten mathematischen Simulation.

Diese Formeln bzw. die Tabellen 3 und 4 werden nun gemäß einem Merkmal der Erfindung als Basis zur Auslegung der Schmelzwanne herangezogen. Dabei kann in der Formel für die minimale Verweilzeit eine Genauigkeit von +/-10 % relativ für realistisch angesehen werden. Hinsichtlich der variablen Parameter erfolgt dabei die Auslegung der Anlage und die Einhaltung der Formel mittels der erwähnten mathematischen Simulation.

Zur Erzielung der erforderlichen minimalen Verweilzeiten $t_{(min)}$ und mittleren Temperaturen $T_{(mit)}$ werden im Wannendesign für eine Wanne vorgegebener Größe sinnvollerweise eine Auswahl der nachfolgenden Einbauten verwendet:

- Überströmwall zur Vermeidung von Kurzschlussströmungen und Erzielung von Temperaturerhöhung durch geringe Glasüberdeckung
- Brückenwall zur Vermeidung von Kurzschlussströmungen, vor allem in der Oberfläche sowie der Vermeidung von Rückströmungen
- Elektrische Zusatzheizung zur Erhöhung der mittleren Glastemperatur und Strömungsstabilisierung
- Blasdüsen in Anordnung quer zur Glasflussrichtung zur Vermeidung von Kurzschlussströmungen, zur Strömungsstabilisierung und zur Erhöhung der mittleren Glastemperatur durch Transport von kaltem Bodenglas an die heisse Oberfläche
- Blasdüsen in Anordnung längs zur Glasflussrichtung zur Vermeidung von Kurzschlussströmungen, zur Strömungsstabilisierung und zur Erhöhung der mittleren Glastemperatur durch Transport von kaltem Bodenglas an die heisse Oberfläche
- Geringe Glasstandshöhe (h) zur Vermeidung von kalten Zonen im Bodenbereich und dadurch Erhöhung der mittleren Glastemperaturen

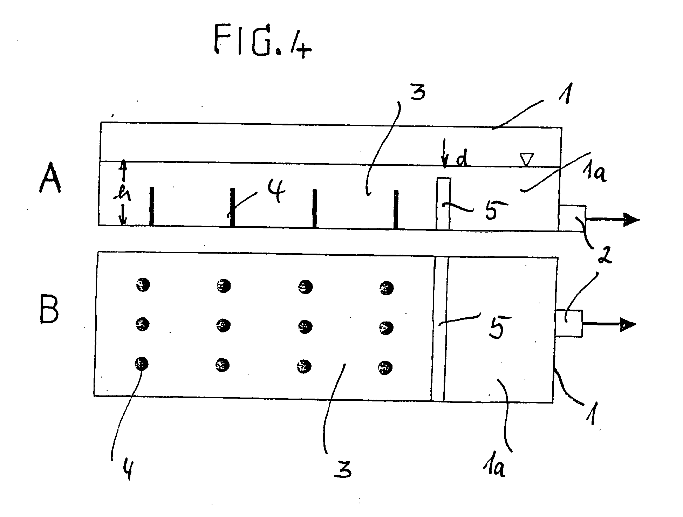

Typische Beispiele für ein entsprechendes zielführendes Wannendesign auf der Basis der vorstehend beschriebenen Einbauten sind in den Figuren 4 bis 8 schematisch dargestellt, jeweils in einer Seitenansicht im Figurenteil A und in einer Draufsicht im Figurenteil B.

Die Schmelzwanne ist jeweils mit der Bezugsziffer 1 und die Glasentnahme mit der Bezugsziffer 2 versehen. Das Glasschmelzbad mit dem Glasstand "h" trägt jeweils die Bezugsziffer 3. Die eingangsseitige Einlegestelle für das Gemenge, der zugehörige Einlegevorbau, das sogenannte Doghouse, das sich in den Figuren 4 bis 8 auf der linken Seite der Schmelzwanne befindet, und das auf der Glasbadoberfläche schwimmenden Gemenge sind in den Zeichnungen nicht dargestellt. Auch der sogenannte Oberofen für die typische Brennstoffbeheizung der Schmelzwanne ist der Einfachheit halber nicht dargestellt.

Die Fig. 4 zeigt dabei ein Wannendesign einer Wanne 1, die eine elektrische Zusatzheizung in Form von in Reihen angeordneten Elektroden 4 besitzt, die der Erhöhung der mittleren Glastemperatur und der Strömungsstabilisierung dient. Die Wanne 1 weist zudem einen Überströmwall 5, der einen Wannenteil 1a mit Glasentnahme 2 abteilt, auf. Der Überströmwall 5 vermeidet Kurzschluss-Strömungen, d. h. einen mehr oder weniger starken Strom direkt zur Glasentnahme 2, und dient ferner der Temperaturerhöhung durch eine geringe Glasüberdeckung "d" oberhalb des Überströmwalles.

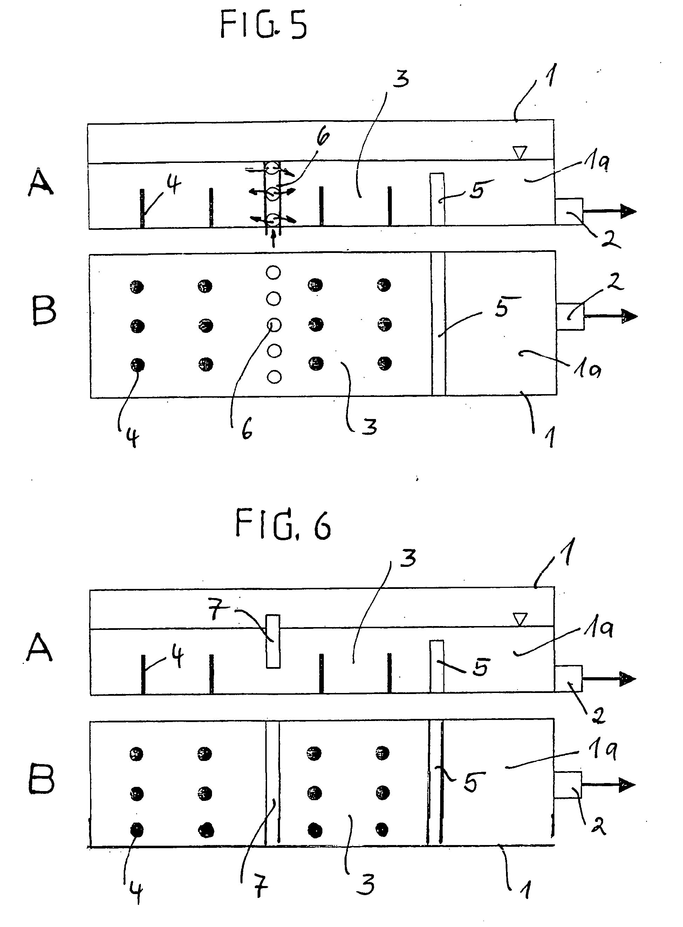

Die Fig. 5 zeigt ein Wannendesign entsprechend Fig. 4, wobei zusätzliche Blasdüsen 6 in einer zeilenweisen Anordnung quer zur Glasflussrichtung zur Vermeidung von Kurzschluss-Strömungen, zur Strömungsstabilisierung und zur Erhöhung der mittleren Glastemperatur durch Transport von kaltem Bodenglas an die heisse Oberfläche vorgesehen sind.

Die Fig. 6 zeigt ebenfalls ein Wannendesign entsprechend Fig. 4, wobei zusätzlich ein Brückenwall 7 zur Vermeidung von Kurzschluss-Strömungen, vor allem in der Oberfläche sowie zur Vermeidung von Rückströmungen, vorgesehen ist.

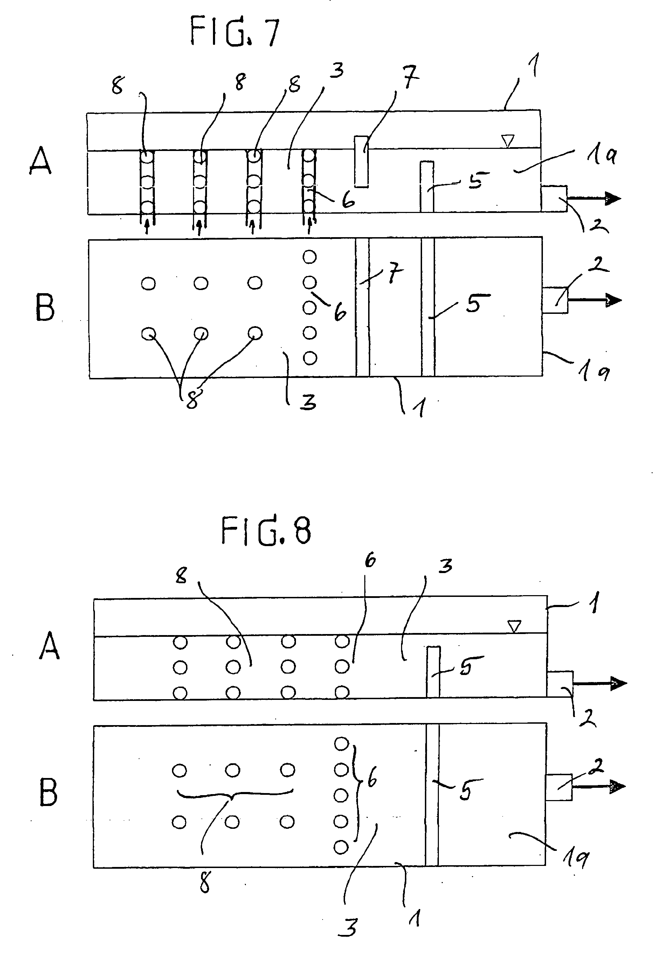

Die Fig. 7 zeigt ein Wannendesign mit einer Kombination eines Brückenwalles 7 nach Fig. 6 mit einem Überströmwall 5 entsprechend der Fig. 5, jedoch ohne die Elektrozusatzheizung durch die Elektroden 4. Ferner sind analog dem Design nach Fig. 5 Blasdüsen 6 quer zur Glasflussrichtung sowie zusätzliche Blasdüsen 8 längs zur Glasflussrichtung angeordnet, welche die gleiche Funktion wie die Blasdüsen 6 haben.

Die Fig. 8 schließlich zeigt ein Wannendesign nach Fig. 7, bei dem jedoch der Brückenwall weggelassen ist.

Generell ist eine zu große Glasstandshöhe (h) zur Verhinderung von kalten Zonen im Boden zu vermeiden, was zur Erhöhung der mittleren Glastemperatur beiträgt.

Die in den Figuren 4 bis 8 gezeigten Einbauten für das zugehörige Wannendesign, z. B. der Brücken- oder Überströmwall, die Blasdüsen und die elektrischen Zusatzheizungen, sind an sich bekannt. Es wird diesbezüglich beispielhaft auf die Schriften DE 10 236 521 A1 und EP 1 285 886 A2 verwiesen. Ihre Einflussnahme auf die Strömungsverhältnisse in der Schmelzwanne wird z. B. in dem Buch von Nölle, Günther, Technik der Glasherstellung, 1997, Deutscher Verlag für Grundstoffindustrie, beschrieben und bildlich dargestellt (S. 87 ff.).

Es kommt im Fall der Erfindung auf die Kombination der Maßnahmen zur Erzielung der erforderlichen minimalen Verweilzeiten und mittleren Temperaturen nach der obengenannten Formel an, d.h. die Auslegung der Anlage und die Einhaltung der Formel erfolgt mittels der erwähnten mathematischen Simulation. Dabei stellen die in den Figuren 4 bis 8 dargestellten Einbauten nurAusführungsbeispiele dar. Auch andere Kombinationen sind denkbar.

Prinzipiell kann nach der hier für das LAS-Glassystem beschriebenen Methode auch für ein anderes Glassystem eine entsprechende Formel für die Wannenauslegung durch empirisch und durch mathematische Simulation ermittelte Größen bzw. Werte aufgestellt werden.

## Patentansprüche

1. Verfahren zum Läutern einer Glasschmelze für ein Glaskeramik-Grünglas mit den Schritten:

   - Bereitstellen eines Glasgemenges auf der Basis eines Lithium-AluminiumSilikat(LAS)-Glassystems mit einem alleinigen Zusatz von Zinnoxid als Läutermittel mit einem Gehalt ≤ 0,4 Gew.-% unter Verzicht von Arsen- und/oder Antimonoxid als Läutermittel,
   - Auslegen der Schmelzwanne hinsichtlich minimaler Verweilzeit des zu läuternden Glases und mittlerer Glastemperatur nach der Formel:

$$t_{(min)} (T, x) = 2 + [0{,}5 \cdot (1700 - T_{(mit)})] + [50 \cdot (0{,}40 - x)] \text{ in h für } T_{(mit)} \le 1700 \text{ °C}$$
$$\text{und } x \le 0{,}40 \text{ \%,}$$

   mit $T_{(mit)}$ = mittlere Glastemperatur, x = Läutermittelgehalt, t(min) = minimale Verweilzeit, und
   - Einschmelzen des Gemenges und Läutern der Schmelze bei Temperaturen < 1.700° C unter Verzicht auf zusätzliche spezielle Hochtemperatur-Läuteraggregate.

2. Verfahren zum Läutern einer Glasschmelze für ein Glaskeramik-Grünglas mit den Schritten:

   - Bereitstellen eines Glasgemenges auf der Basis eines Lithium-AluminiumSilikat(LAS)-Glassystems mit einem alleinigen Zusatz von Zinnoxid als Läutermittel mit einem Gehalt ≤ 0,4 Gew.-% unter Verzicht auf Arsen- und/oder Antimonoxid als Läutermittel,
   - Auslegen der Schmelzwanne hinsichtlich minimaler Verweilzeit des zu läuternden Glases und mittlerer Glastemperatur nach der Formel:

$$t_{(min)} (T, x) = -13 + [0{,}5 \cdot (1750 - T_{(mit)})] + [50 \cdot (0{,}40 - x)] \text{ in h für}$$
$$T_{(mit)} \le 1720 \text{ °C und } x \le 0{,}40 \text{ \%}$$

   mit $t_{(min)}$ = minimaler Verweilzeit, $T_{(mit)}$ = mittlere Glastemperatur, x = Läutermittelgehalt, und
   - Einschmelzen des Gemenges und Läutern der Schmelze bei Temperaturen ≤ 1720 °C unter Verzicht auf zusätzliche spezielle Hochtemperatur-Läuteraggregate.

3. Verfahren nach Anspruch 1 oder 2, bei dem ein Glasgemenge für ein LAS-Glassystem bereitgestellt wird, das zu einer mittels eines Vanadiumoxid-Zusatzes dunkel eingefärbten Glaskeramik mit Hochquarz-Mischkristallen als vorherrschende Kristallphase führt, welche ohne Zusatz eines Reduktionsmittels bei einer Dicke von 4 mm eine Lichttransmission im Sichtbaren von τ < 5 % und eine IR-Transmission bei 1600 nm von > 65 % aufweist.

**4.** Verfahren nach einem der Ansprüche 1 bis 3, bei dem der Läutermittelgehalt von Zinnoxid ≤ 0,35 Gew.-%, bevorzugt 0,3 Gew.-% und besonders bevorzugt ≤ 0,25 Gew.-% beträgt.

**5.** Verfahren nach einem der Ansprüche 1 bis 3, bei dem die Glasschmelze mit einem Gehalt von Zinnoxid von 0,4 Gew.-% mit einer minimalen Verweilzeit des Glases von 7 h bei 1690°C mittlerer Glastemperatur hergestellt wird.

**6.** Verfahren nach Anspruch 4, bei dem die Glasschmelze mit einem Gehalt von Zinnoxid von 0,35 Gew.-% mit einer minimalen Verweilzeit des Glases von 9.5 h bei 1690° C mittlerer Glastemperatur hergestellt wird.

**7.** Verfahren nach Anspruch 4, bei dem die Glasschmelze mit einem Gehalt von Zinnoxid von 0,3 Gew.-% mit einer minimalen Verweilzeit des Glases von 12 h bei 1690° C mittlerer Glastemperatur hergestellt wird.

**8.** Verfahren nach Anspruch 4, bei dem die Glasschmelze mit einem Gehalt von Zinnoxid von 0,25 Gew.-% mit einer minimalen Verweilzeit des Glases von 14,5 h bei 1690° C mittlerer Glastemperatur hergestellt wird.

**9.** Verfahren nach Anspruch 4, bei dem die Glasschmelze mit einem Gehalt an Zinnoxid von 0,2 Gew.-% mit einer minimalen Verweilzeit des Glases von 12 h bei 1700° C mittlerer Glastemperatur hergestellt wird.

**10.** Verfahren nach Anspruch 4, bei dem die Glasschmelze mit einem Gehalt an Zinnoxid von 0,2 Gew.-% mit einer minimalen Verweilzeit des Glases von 17 h bei 1690° C mittlerer Glastemperatur hergestellt wird.

**11.** Verfahren nach Anspruch 4, bei dem die Glasschmelze mit einem Gehalt an Zinnoxid von 0,2 Gew.-% mit einer minimalen Verweilzeit des Glases von 22 h bei 1680° C hergestellt wird.

**12.** Verfahren nach Anspruch 4, bei dem die Glasschmelze mit einem Gehalt an Zinnoxid von 0,1 Gew.% mit einer minimalen Verweilzeit des Glases von 17 h bei 1700° C mittlerer Glastemperatur hergestellt wird.

**13.** Verfahren nach Anspruch 4, bei dem die Glasschmelze mit einem Gehalt an Zinnoxid von 0,1 Gew.% mit einer minimalen Verweilzeit des Glases von 22 h bei 1690° C mittlerer Glastemperatur hergestellt wird.

**14.** Verfahren nach Anspruch 4, bei dem die Glasschmelze mit einem Gehalt an Zinnoxid von 0,1 Gew.% mit einer minimalen Verweilzeit des Glases von 27 h bei 1680° C hergestellt wird.

**15.** Verfahren nach Anspruch 2 und 4, bei dem die Glasschmelze mit einem Gehalt an Zinnoxid von 0,1 Gew.-% mit einer minimalen Verweilzeit des Glases von 17 h bei 1720 °C hergestellt wird.

**16.** Verfahren nach einem der Ansprüche 1 bis 15, bei dem die Auslegung der Schmelzwanne mittels mathematischer Simulation erfolgt.

**Claims**

**1.** Process for refining a glass melt for a glass-ceramic green glass, which comprises the steps:

- provision of a glass mix based on a lithium-aluminium silicate (LAS) glass system with an addition of only tin oxide as refining agent in an amount of ≤ 0.4% by weight and omission of arsenic oxide and/or antimony oxide as refining agents,
- design of the melting tank in respect of the minimum residence time of the glass to be refined and average glass temperature according to the formula:

$$t_{(min)}(T,x) = 2 + [0.5 \cdot (1700 - T_{(av)})] + [50 \cdot (0.40 - x)]$$
$$\text{in h for } T_{(av)} \leq 1700°C \text{ and } x \leq 0.40\%,$$

= average glass temperature, x = refining agent content, $t_{(min)}$ = minimum residence time, and

- melting of the mix and refining of the melt at temperatures of < 1700°C without use of additional special high-temperature refining apparatuses.

2. Process for refining a glass melt for a glass-ceramic green glass, which comprises the steps:

- provision of a glass mix based on a lithium-aluminium silicate (LAS) glass system with an addition of only tin oxide as refining agent in an amount of $\leq 0.4\%$ by weight and omission of arsenic oxide and/or antimony oxide as refining agents,
- design of the melting tank in respect of the minimum residence time of the glass to be refined and average glass temperature according to the formula:

$$t_{(min)}(T,x) = -13 + [0.5 \cdot (1750 - T_{(av)})] + [50 \cdot (0.40 - x)]$$
$$\text{in h for } T_{(av)} \leq 1720°C \text{ and } x \leq 0.40\%,$$

where $t_{(min)}$ = minimum residence time, $T_{(av)}$ = average glass temperature, x = refining agent content, and
- melting of the mix and refining of the melt at temperatures of < 1720°C without use of additional special high-temperature refining apparatuses.

3. Process according to Claim 1 or 2, wherein a glass mix for an LAS glass system which leads to a glass-ceramic which is darkly coloured by addition of vanadium oxide and has high-quartz mixed crystals as predominant crystal phase and which has, without addition of a reducing agent and at a thickness of 4 mm, a light transmission in the visible range of $\tau < 5\%$ and an IR transmission at 1600 nm of > 65% is provided.

4. Process according to any of Claims 1 to 3, wherein the refining agent content of tin oxide is $\leq 0.35\%$ by weight, preferably 0.3% by weight and particularly preferably $\leq 0.25\%$ by weight.

5. Process according to any of Claims 1 to 3, wherein the glass melt is produced with a content of tin oxide of 0.4% by weight and a minimum residence time of the glass of 7 hours at an average glass temperature of 1690°C.

6. Process according to Claim 4, wherein the glass melt is produced with a content of tin oxide of 0.35% by weight and a minimum residence time of the glass of 9.5 hours at an average glass temperature of 1690°C.

7. Process according to Claim 4, wherein the glass melt is produced with a content of tin oxide of 0.3% by weight and a minimum residence time of the glass of 12 hours at an average glass temperature of 1690°C.

8. Process according to Claim 4, wherein the glass melt is produced with a content of tin oxide of 0.25% by weight and a minimum residence time of the glass of 14.5 hours at an average glass temperature of 1690°C.

9. Process according to Claim 4, wherein the glass melt is produced with a content of tin oxide of 0.2% by weight and a minimum residence time of the glass of 12 hours at an average glass temperature of 1700°C.

10. Process according to Claim 4, wherein the glass melt is produced with a content of tin oxide of 0.2% by weight and a minimum residence time of the glass of 17 hours at an average glass temperature of 1690°C.

11. Process according to Claim 4, wherein the glass melt is produced with a content of tin oxide of 0.2% by weight and a minimum residence time of the glass of 22 hours at 1680°C.

12. Process according to Claim 4, wherein the glass melt is produced with a content of tin oxide of 0.1% by weight and a minimum residence time of the glass of 17 hours at an average glass temperature of 1700°C.

13. Process according to Claim 4, wherein the glass melt is produced with a content of tin oxide of 0.1% by weight and a minimum residence time of the glass of 22 hours at an average glass temperature of 1690°C.

14. Process according to Claim 4, wherein the glass melt is produced with a content of tin oxide of 0.1% by weight and a minimum residence time of the glass of 27 hours at 1680°C.

**15.** Process according to Claims 2 and 4, wherein the glass melt is produced with a content of tin oxide of 0.1% by weight and a minimum residence time of the glass of 17 hours at 1720°C.

**16.** Process according to any of Claims 1 to 15, wherein the design of the melting tank is carried out by means of mathematical simulation.

**Revendications**

**1.** Procédé d'affinage d'un verre fondu pour un verre vert de vitrocéramique, comprenant les étapes suivantes :

- la préparation d'un mélange de verre à base d'un système de verre lithium-aluminium-silicate (LAS) avec un ajout unique d'oxyde d'étain en tant qu'agent d'affinage en une teneur ≤ 0,4 % en poids, sans oxyde d'arsenic et/ou d'antimoine en tant qu'agent d'affinage,
- la configuration du bassin de fusion au regard du temps de séjour minimal du verre à affiner et de la température moyenne du verre selon la formule :

$$t_{(min)} \ (T, \ x) = 2 + [0,5 \cdot (1700 - T_{(moy)})] + [50 \cdot (0,40 - x)] \ \text{en h}$$
$$\text{pour } T_{(moy)} \leq 1\ 700 \ °C \ \text{et } x \leq 0,40 \ \%,$$

avec $T_{(moy)}$ = température moyenne du verre, x = teneur en agent d'affinage, $t_{(min)}$ = temps de séjour minimal, et
- la fusion du mélange et l'affinage de la masse fondue à des températures < 1 700 °C, sans appareils d'affinage à température élevée spéciaux supplémentaires.

**2.** Procédé d'affinage d'un verre fondu pour un verre vert de vitrocéramique, comprenant les étapes suivantes :

- la préparation d'un mélange de verre à base d'un système de verre lithium-aluminium-silicate (LAS) avec un ajout unique d'oxyde d'étain en tant qu'agent d'affinage en une teneur ≤ 0,4 % en poids, sans oxyde d'arsenic et/ou d'antimoine en tant qu'agent d'affinage,
- la configuration du bassin de fusion au regard du temps de séjour minimal du verre à affiner et de la température moyenne du verre selon la formule :

$$t_{(min)} \ (T, \ x) = -13 + [0,5 \cdot (1750 - T_{(moy)})] + [50 \cdot (0,40 - x)] \ \text{en}$$
$$\text{h pour } T_{(moy)} \leq 1\ 720 \ °C \ \text{et } x \leq 0,40 \ \%,$$

avec $t_{(min)}$ = temps de séjour minimal, $T_{(moy)}$ = température moyenne du verre, x = teneur en agent d'affinage, et
- la fusion du mélange et l'affinage de la masse fondue à des températures < 1 720 °C, sans appareils d'affinage à température élevée spéciaux supplémentaires.

**3.** Procédé selon la revendication 1 ou 2, dans lequel un mélange de verre pour un système de verre LAS est préparé, qui conduit à une vitrocéramique colorée en une teinte sombre par un ajout d'oxyde de vanadium, contenant des cristaux mixtes de quartz bêta en tant que phase cristalline prédominante, qui présente, sans ajout d'un réducteur, à une épaisseur de 4 mm, une transmission de lumière dans la plage visible de T < 5 % et une transmission IR à 1 600 nm > 65 %.

**4.** Procédé selon l'une quelconque des revendications 1 à 3, dans lequel la teneur en agent d'affinage oxyde d'étain est ≤ 0,35 % en poids, de préférence 0,3 % en poids et de manière particulièrement préférée ≤ 0,25 % en poids.

**5.** Procédé selon l'une quelconque des revendications 1 à 3, dans lequel le verre fondu est préparé avec une teneur en oxyde d'étain de 0,4 % en poids et avec un temps de séjour minimal du verre de 7 h à une température moyenne du verre de 1 690 °C.

**6.** Procédé selon la revendication 4, dans lequel le verre fondu est préparé avec une teneur en oxyde d'étain de 0,35 % en poids et avec un temps de séjour minimal du verre de 9,5 h à une température moyenne du verre de 1 690 °C.

7. Procédé selon la revendication 4, dans lequel le verre fondu est préparé avec une teneur en oxyde d'étain de 0,3 % en poids et avec un temps de séjour minimal du verre de 12 h à une température moyenne du verre de 1 690 °C.

8. Procédé selon la revendication 4, dans lequel le verre fondu est préparé avec une teneur en oxyde d'étain de 0,25 % en poids et avec un temps de séjour minimal du verre de 14,5 h à une température moyenne du verre de 1 690 °C.

9. Procédé selon la revendication 4, dans lequel le verre fondu est préparé avec une teneur en oxyde d'étain de 0,2 % en poids et avec un temps de séjour minimal du verre de 12 h à une température moyenne du verre de 1 700 °C.

10. Procédé selon la revendication 4, dans lequel le verre fondu est préparé avec une teneur en oxyde d'étain de 0,2 % en poids et avec un temps de séjour minimal du verre de 17 h à une température moyenne du verre de 1 690 °C.

11. Procédé selon la revendication 4, dans lequel le verre fondu est préparé avec une teneur en oxyde d'étain de 0,2 % en poids et avec un temps de séjour minimal du verre de 22 h à 1 680 °C.

12. Procédé selon la revendication 4, dans lequel le verre fondu est préparé avec une teneur en oxyde d'étain de 0,1 % en poids et avec un temps de séjour minimal du verre de 17 h à une température moyenne du verre de 1 700 °C.

13. Procédé selon la revendication 4, dans lequel le verre fondu est préparé avec une teneur en oxyde d'étain de 0,1 % en poids et avec un temps de séjour minimal du verre de 22 h à une température moyenne du verre de 1 690 °C.

14. Procédé selon la revendication 4, dans lequel le verre fondu est préparé avec une teneur en oxyde d'étain de 0,1 % en poids et avec un temps de séjour minimal du verre de 27 h à 1 680 °C.

15. Procédé selon les revendications 2 et 4, dans lequel le verre fondu est préparé avec une teneur en oxyde d'étain de 0,1 % en poids et avec un temps de séjour minimal du verre de 17 h à 1 720 °C.

16. Procédé selon l'une quelconque des revendications 1 à 15, dans lequel la configuration du bassin de fusion a lieu par simulation mathématique.

# Fig. 1

# Fig. 2

# Fig. 3

# FIG.4

# FIG. 5

# FIG. 6

## FIG. 7

## FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19939771 B4
- DE 10003948 A1
- WO 0216279 A1
- DE 19939787 C2
- JP 2002154840 A
- EP 1593658 A1

- EP 0908417 A2
- DE 10146884 A1
- DE 10223889 A1
- DE 10236521 A1
- EP 1285886 A2

**In der Beschreibung aufgeführte Nicht-Patentliteratur**

- **NÖLLE, GÜNTHER.** Technik der Glasherstellung. Deutscher Verlag für Grundstoffindustrie, 1997